# EUROPÄISCHE PATENTSCHRIFT

(11) **EP 2 658 764 B1**
(45) Veröffentlichungstag und Bekanntmachung des Hinweises auf die Patenterteilung: **30.08.2017**
(21) Anmeldenummer: 12715542.2
(22) Anmeldetag: 28.03.2012
(51) Int. Cl.: G06F 21/72, G06F 21/33, G06F 21/62, B61L 15/00, B61L 27/00

(54) **SYSTEM UND VERFAHREN FÜR EIN SCHLÜSSELMANAGEMENT EINES ZUGSICHERUNGSSYSTEMS**
KEY MANAGEMENT SYSTEM AND METHOD FOR A TRAIN PROTECTION SYSTEM
SYSTÈME ET PROCÉDÉ DE GESTION DE CLÉS D'UN SYSTÈME DE PROTECTION DES TRAINS

(30) Priorität: 05.04.2011 DE 102011006772
(43) Veröffentlichungstag der Anmeldung: 06.11.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/055460
(87) Internationale Veröffentlichungsnummer: WO 2012/136525

(56) Entgegenhaltungen:
- EP-A1- 2 039 583
- DE-A1-102007 041 177
- BRANDENBURG D ET AL: "Effektive ETCS-Schlüsselverwaltung mit KEY.connect", SIGNAL + DRAHT, TELZLAFF VERLAG GMBH. DARMSTADT, DE, Bd. 102, Nr. 4, 1. April 2010 (2010-04-01) , Seiten 44-48, XP001552658, ISSN: 0037-4997

## Beschreibung

Die vorliegende Erfindung bezieht sich auf ein System und ein Verfahren für ein Schlüsselmanagement eines Zugsicherungssystems.

### Stand der Technik

Ein im Schienenverkehr zur Zugsicherung eingesetztes Sicherungssystem ist das sogenannte europäische Zugsteuersystem "ETCS", European Train Control System). Dieses Verkehrsleitsystem nutzt üblicherweise Funkdatenübertragung, beispielsweise über GSM-R, um Leitnachrichten und Sicherungsnachrichten zwischen Schienentriebfahrzeugen bzw. deren Zugsicherungsrechnern, wie zum Beispiel dem European Vital Computer (EVC) und stationären Streckenzentralen, den Funkblockzentralen ("RBC", Radio Block Centres), auszutauschen. Um die Daten bei der Übertragung vor unbemerkten Manipulationen und Übertragungsfehlern zu schützen, sind sie mit einer kryptographischen Prüfsumme geschützt, zu deren Berechnung und/oder Überprüfung ein kryptographischer Schlüssel notwendig ist.

Üblicherweise werden symmetrische Kryptographieverfahren eingesetzt, so dass sowohl das Schienentriebfahrzeug als auch die Streckenzentrale zumindest einen Schlüssel besitzen muss. Da sich das Schienenfahrzeug auf seiner vorbestimmten Route durch Zuständigkeitsbereiche verschiedener stationärer Streckenzentralen entlang der Route bewegt, ist es notwendig, dass jeder der temporär zuständigen Streckenzentralen ein passender Schlüssel zur Kommunikation mit dem Schienenfahrzeug mitgeteilt wird. Die Schlüsselverteilung an die Streckenzentralen ist daher ein grundlegendes Problem eines effektiven Zugsicherungssystems, um die Kommunikation des Schienenfahrzeugs mit allen Streckenzentralen, gegebenenfalls auch mit Streckenzentralen anderer Streckenbetreiber, in manipulationssicherer Form zu gewährleisten.

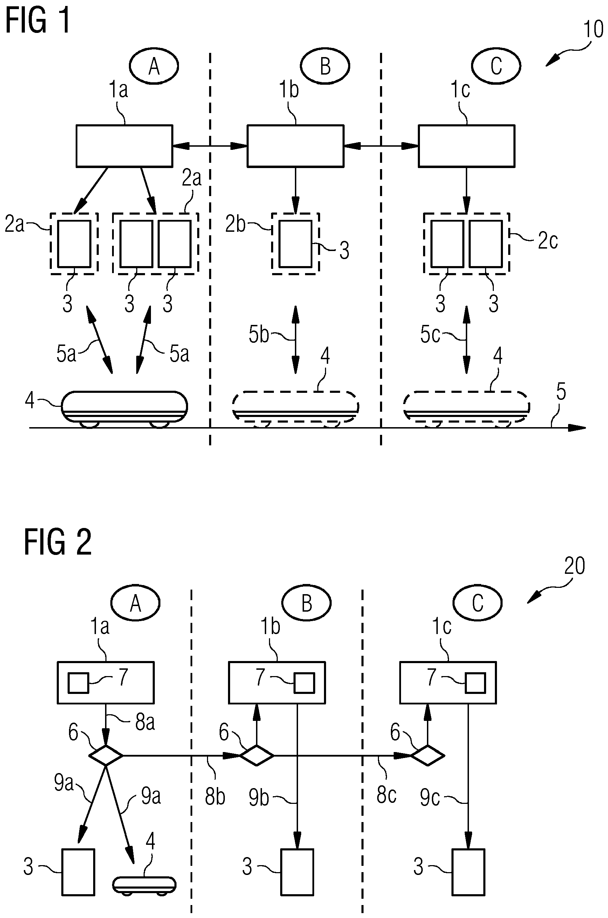

Fig. 1 zeigt den prinzipiellen Aufbau eines Schienenfahrzeugleitsystems 10 in einer schematischen Darstellung. Ein Schienenfahrzeug 4, beispielsweise ein Zug mit einem steuerbaren Triebfahrzeug, welches einen EVC an Bord hat, bewegt sich entlang einer Route 5 durch verschiedene Domänen A, B und C, welche unter der Kontrolle verschiedener Streckenbetreiber stehen, und welche durch die gepunkteten Linien optisch voneinander abgegrenzt sind. Die Domänen A, B und C können beispielsweise Länder wie Deutschland, Österreich und Italien mit jeweils eigenen Schienennetzen sein, und der Zug 4 kann beispielsweise eine geplante Route 5 von München nach Venedig haben, die ihn durch alle drei Länder Deutschland, Österreich und Italien führt.

Jeder Streckenbetreiber besitzt eine Schlüsselmanagementzentrale oder Schlüsselvergabestelle 1a, 1b bzw. 1c, auch KMC ("Key Management Centre") genannt. Das heißt, in der Domäne A ist die KMC 1a für das Schlüsselmanagement verantwortlich, in der Domäne B die KMC 1b und in der Domäne C die KMC 1c. Unter der Ägide der KMCs 1a, 1b und 1c stehen jeweils Streckenzentralen 3, sogenannte RBCs, die Schlüsselnachrichtencodes, sogenannte KMACs ("Key Message Authentication Codes") von den KMCs erhalten können. Die KMACs können dabei Kommunikationsschlüssel umfassen, welche zur sicheren Kommunikation der RBCs 3 mit dem Zug 4 dienen können.

Die Streckenzentralen oder RBCs 3 sind lokal stationär für bestimmte Blockabschnitte des Schienennetzwerks verantwortlich. Ein RBC 3 kann dabei jeweils einer Schlüsselgruppe 2a, 2b, 2c zugeordnet sein, welche von dem jeweils übergeordneten KMC 1a, 1b, 1c in der jeweiligen Domäne A, B oder C mit Kommunikationsschlüsseln versorgt wird. Es kann dabei vorgesehen sein, dass mehrere RBCs 3 der gleichen Schlüsselgruppe zugeordnet sind. Beispielhaft sind in der Domäne A und in der Domäne C je zwei RBCs 3 einer Schlüsselgruppe 2a bzw. 2c zugeordnet. Es kann alternativ auch sein, dass ein RBC 3 gleichzeitig auch seine eigene Schlüsselgruppe bildet, wie beispielhaft in der Domäne B mit der Schlüsselgruppe 2b dargestellt. Jede Schlüsselgruppe 2a, 2b, 2c erhält von dem übergeordneten KMC 1a, 1b, 1c einen gruppenspezifischen Kommunikationsschlüssel zugeteilt.

Das Schienenfahrzeug 4 kommuniziert dabei über Kommunikationsverbindungen 5a mit RBCs 3 in der ersten Domäne A, über Kommunikationsverbindungen 5b mit dem RBC 3 in der zweiten Domäne B und über Kommunikationsverbindungen 5c mit RBCs 3 in der dritten Domäne A. Dabei werden die Kommunikationsverbindungen 5a, 5b und 5c jeweils über die von den KMCs 1a, 1b, 1c zur Verfügung gestellten Kommunikationsschlüsseln abgesichert.

Eine Möglichkeit zur Schlüsselverteilung von Kommunikationsschlüsseln an die verschiedenen Streckenzentralen 3 besteht in einer manuellen Verteilung der Kommunikationsschlüssel durch einen Mitarbeiter des Zugbetreibers oder des jeweiligen Streckenbetreibers. In diesem Fall kann es sein, dass der Mitarbeiter vor Fahrtantritt domänenspezifische Kommunikationsschlüssel von jedem der KMCs 1a, 1b, 1c anfordert und diese domänenspezifischen Kommunikationsschlüssel auf dem Steuerrechner, der sogenannten OBU ("On-Board Unit") des Zugs 4 installiert. Die Installation kann beispielsweise durch manuelle Eingabe über eine Eingabeschnittstelle, zum Beispiel eine Tastatur oder ein berührungsempfindlicher Bildschirm, über eine lokale Netzwerkverbindung, ein lokal eingesetztes Speichermedium, zum Beispiel eine Diskette oder ein USB-Stick, oder eine gesicherte drahtlose Fernwartungsverbindung erfolgen.

Eine derartige Schlüsselverteilung ist aufwändig, fehleranfällig und ineffizient. Insbesondere ist hierzu eine ständige Verbindung zwischen KMCs verschiedener Domänen notwendig, um den ständigen Austausch von Kommunikationsschlüsseln zwischen den KMCs zu gewährleisten.

Die deutsche Patentanmeldung DE 10 2007 041 177 A beschreibt ein Verfahren zum Online-Schlüsselmanagement, bei dem jede einzelne KMC Schlüsseldaten für Ihre Domäne erzeugt. Einem Schienenfahrzeug ist dabei eine "kooperative KMC" zugeordnet, die autorisiert, Schlüsseldaten an das Schienenfahrzeug zu übertragen. Soll ein Schienenfahrzeug Domänen weiterer KMCs durchfahren, so werden die jeweiligen Schlüsseldaten zuvor von der kooperativen KMC angefordert und an das Schienenfahrzeug gesendet.

Es besteht daher ein Bedarf nach einfacheren Lösungen für eine Schlüsselverteilung für Kommunikationsschlüssel in domänenübergreifenden Sicherungssystemen für Schienenfahrzeuge.

### Zusammenfassung der Erfindung

Diese Aufgabe wird durch das Verfahren zum Verteilen von Kommunikationsschlüsseln gemäß Anspruch 1 sowie durch die Vorrichtung zum Verteilen von Kommunikationsschlüsseln gemäß Anspruch 10 gelöst. Eine Idee der vorliegenden Erfindung ist es, einen Schlüsselverteilungsplan anhand einer geplanten Zugroute auszuarbeiten und für die Befahrung dieser Route notwendige Kommunikationsschlüssel automatisch zu konfigurieren. Hierzu können Kommunikationsschlüssel durch eine zentrale verantwortliche Schlüsselvergabestelle erzeugt werden, die auf die geplante Route abgestimmt sind. Diese Kommunikationsschlüssel können den beteiligten Schlüsselvergabestellen anderer Domänen bzw. Streckenbetreiber zur Verfügung gestellt werden, so dass die zentral und automatisch erstellten Kommunikationsschlüssel gezielt an die Züge und die Streckenzentralen verteilt werden können.
Einer der Vorteile dieser Vorgehensweise ist es, dass die Definition eines Schlüsselverteilungsplans erheblich vereinfacht wird. Außerdem kann die Gültigkeit der Kommunikationsschlüssel hinsichtlich Fahrstrecke und Fahrtzeit des Zugs in einfacher Weise örtlich und zeitlich begrenzt werden, so dass der erfindungsgemäße Schlüsselverteilungsplan weniger fehleranfällig ist als herkömmliche Schlüsselverteilungspläne.
Ein weiterer Vorteil ist die Automatisierbarkeit des Schlüsselverteilungsplans durch die Möglichkeit, den Plan automatisch aus extern bereitgestellten Fahrtroutenplänen zu generieren und zu verifizieren.
Eine Ausführungsform der vorliegenden Erfindung besteht daher in einem Verfahren zum Verteilen von Kommunikationsschlüsseln für die Verschlüsselung von Verkehrsleitnachrichten eines Schienenfahrzeugsicherungssystems, mit den Schritten des Erzeugens eines Kommunikationsschlüssels in einer ersten Schlüsselvergabestelle eines ersten Streckenbetreibers in Abhängigkeit von einer geplanten Fahrtroute eines Schienenfahrzeugs, des Bereitstellens des Kommunikationsschlüssels an eine zweite Schlüsselvergabestelle eines zweiten Streckenbetreibers, des Bereitstellens des Kommunikationsschlüssels an das Schienenfahrzeug durch die erste Schlüsselvergabestelle, und des Verschlüsselns von Verkehrsleitnachrichten des Schienenfahrzeugs mit dem Kommunikationsschlüssel zum manipulationssicheren Kommunizieren des Schienenfahrzeugs mit Streckenzentralen des ersten Streckenbetreibers und mit Streckenzentralen des zweiten Streckenbetreibers.

Vorteilhafterweise erfolgt ein Bereitstellen des Kommunikationsschlüssels an erste Streckenzentralen durch den ersten Streckenbetreiber und ein Bereitstellen des Kommunikationsschlüssels an zweite Streckenzentralen durch den zweiten Streckenbetreiber.

Gemäß einer bevorzugten Ausführungsform umfasst der Kommunikationsschlüssel eine Vielzahl von streckenzentralenspezifischen Kommunikationsschlüsseln, wobei das Bereitstellen des Kommunikationsschlüssels an die zweite Schlüsselvergabestelle das Bereitstellen einer Gruppe von streckenzentralenspezifischen Kommunikationsschlüsseln, welche den zweiten Streckenzentralen des zweiten Streckenbetreibers zugeordnet sind, an die zweite Schlüsselvergabestelle umfasst. Dies hat den Vorteil, dass von unterschiedlichen Streckenzentralen unterschiedliche Kommunikationsschlüssel verwendet werden, so dass bei versehentlicher Offenlegung oder bei Manipulation eines der Kommunikationsschlüssel die Kompromittierung des Gesamtsystems auf lediglich eine Streckenzentrale begrenzt bleibt.

Gemäß einer Ausführungsform erfolgt das Erzeugen des Kommunikationsschlüssels in einer ersten Schlüsselvergabestelle das Ableiten der streckenzentralenspezifischen Kommunikationsschlüssel von einem Hauptkommunikationsschlüssel durch ein Schlüsselableitungsverfahren. Dies bietet den Vorteil, dass das Ableiten der streckenzentralenspezifischen Kommunikationsschlüssel von einem Steuerrechner des Schienenfahrzeugs selbst durchgeführt werden kann.

Gemäß einer bevorzugten Ausführungsform erfolgt das Ableiten der streckenzentralenspezifischen Kommunikationsschlüssel durch die erste Schlüsselvergabestelle nur für die ersten Streckenzentralen und das Ableiten der streckenzentralenspezifischen Kommunikationsschlüssel durch die zweite Schlüsselvergabestelle nur für die zweiten Streckenzentralen. Dadurch kann vorteilhafterweise bei einem hohen Fahrzeugaufkommen die Schlüsselverwaltung in einer Schlüsselvergabestelle nur auf diejenigen abgeleiteten Kommunikationsschlüssel begrenzt werden, die in dieser Schlüsselvergabestelle tatsächlich benötigt werden. Vorteilhafterweise begrenzt sich dadurch das Datenaufkommen bei einem Bereitstellen der Kommunikationsschlüssel durch die erste Schlüsselvergabestelle an weitere Schlüsselvergabestellen.

Gemäß einer vorteilhaften Ausführungsform umfasst der Kommunikationsschlüssel eine Vielzahl von schienenfahrzeugspezifischen Kommunikationsschlüsseln, wobei das Bereitstellen des Kommunikationsschlüssels an das Schienenfahrzeug das Bereitstellen eines für das Schienenfahrzeug spezifischen Kommunikationsschlüssels aus der Vielzahl von schienenfahrzeugspezifischen Kommunikationsschlüsseln umfasst. Dies bietet den Vorteil, dass beispielsweise bei einem Zusammenkuppeln von zwei Schienenfahrzeugen unterschiedlicher Schienenfahrzeugbetreiber eine sichere Schienenfahrzeugkommunikation der gekoppelten Schienenfahrzeuge untereinander möglich ist, wenn die betreffenden Schienenfahrzeuge untereinander ihre fahrzeugspezifischen Kommunikationsschlüssel abgleichen.

Vorteilhafterweise kann die geplante Fahrtroute des Schienenfahrzeugs von einem Leitsystem zur Fahrdienststeuerung bereitgestellt werden, so dass die erste Schlüsselvergabestelle das Erzeugen und das Bereitstellen des Kommunikationsschlüssels automatisiert durchführt. Damit wird die Erzeugung und Verteilung von Kommunikationsschlüssels zum Einen erheblich beschleunigt, zum Anderen kann automatisch überprüft werden, ob entlang der geplanten Fahrtroute alle notwendigen Kommunikationsschlüssel erzeugt und verteilt worden sind. So können frühzeitig und verlässlich Abweichungen und Fehleingaben erkannt werden.

Gemäß einer weiteren Ausführungsform schafft die Erfindung eine Steuereinrichtung in einer ersten Schlüsselvergabestelle eines ersten Schienennetzstreckenbetreibers zum Verteilen von Kommunikationsschlüsseln für die Verschlüsselung von Verkehrsleitnachrichten eines Schienenfahrzeugsicherungssystems, mit einer Erzeugungseinrichtung, welche dazu ausgelegt ist, einen Kommunikationsschlüssel in Abhängigkeit von einer geplanten Fahrtroute eines Schienenfahrzeugs zu erzeugen, und einer Bereitstellungseinrichtung, welche dazu ausgelegt ist, den erzeugten Kommunikationsschlüssel an eine zweite Schlüsselvergabestelle eines zweiten Streckenbetreibers und an das Schienenfahrzeug bereitzustellen, wobei der Kommunikationsschlüssel zum Verschlüsseln von Verkehrsleitnachrichten des Schienenfahrzeugs zum manipulationssicheren Kommunizieren des Schienenfahrzeugs mit Streckenzentralen des ersten Streckenbetreibers und mit Streckenzentralen des zweiten Streckenbetreibers ausgelegt ist.

Gemäß einer weiteren Ausführungsform schafft die Erfindung ein Schienenfahrzeugsicherungssystem mit einer erfindungsgemäßen Steuereinrichtung, einer ersten Schlüsselvergabestelle, in der die Steuereinrichtung angeordnet ist, einer Vielzahl von ersten Streckenzentralen, welche dazu ausgelegt sind, von der ersten Schlüsselvergabestelle mit einem von der Steuereinrichtung erzeugten Kommunikationsschlüssel für die Verschlüsselung von Verkehrsleitnachrichten eines Schienenfahrzeugs versorgt zu werden, einer zweiten Schlüsselvergabestelle, und einer Vielzahl von zweiten Streckenzentralen, welche dazu ausgelegt sind, von der zweiten Schlüsselvergabestelle mit einem von der Steuereinrichtung erzeugten Kommunikationsschlüssel für die Verschlüsselung von Verkehrsleitnachrichten eines Schienenfahrzeugs versorgt zu werden.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung eines Aufbaus eines Schienenfahrzeugleitsystems;
- Fig. 2: eine schematische Darstellung eines Schienenfahrzeugsicherungssystems gemäß einer Ausführungsform der Erfindung;
- Fig. 3: eine schematische Darstellung eines Schienenfahrzeugsicherungssystems gemäß einer weiteren Ausführungsform der Erfindung;
- Fig. 4: eine schematische Darstellung eines Schienenfahrzeugsicherungssystems gemäß einer weiteren Ausführungsform der Erfindung;
- Fig. 5: eine schematische Darstellung eines Schienenfahrzeugsicherungssystems gemäß einer weiteren Ausführungsform der Erfindung; und
- Fig. 6: eine schematische Darstellung eines Verfahrens zum Verteilen von Kommunikationsschlüsseln für die Verschlüsselung von Verkehrsleitnachrichten eines Schienenfahrzeugsicherungssystems gemäß einer weiteren Ausführungsform der Erfindung zeigt.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

Kommunikationsschlüssel im Sinne der folgenden Beschreibung umfassen alle kryptographischen Informationen und Dateneinheiten, welche dazu geeignet sind, Daten im Klarformat zu verschlüsseln und daraus abhör- und/oder auslesesichere Daten im Geheimformat zu erzeugen, bzw. die dazu geeignet sind, die Integrität von Daten im Klarformat zu schützen und eine kryptographische Prüfsumme zu errechnen, und welche weiterhin dazu geeignet sind, in Kenntnis der kryptographischen Informationen aus den Daten im Geheimformat die Daten im Klarformat zurückzugewinnen bzw. zu prüfen, dass die Daten während des Transports nicht manipuliert wurden. Kommunikationsschlüssel im Sinne der Erfindung können beispielsweise symmetrische Schlüsselpaare, asymmetrische Schlüsselpaare oder ähnliche kryptographische Verfahren beinhalten. Kommunikationsschlüssel können dabei beispielsweise mit Verfahren wie AES, DES, KDF, IPsec, SSL/TLS, MACsec, L2TP, PPTP, PGP, S/MIME oder eine ähnliche Technik mit einem dazugehörigen Schlüsselmanagement, wie zum Beispiels IKE, EAP oder anderer Verfahren eingesetzt werden.

Fig. 2 zeigt eine schematische Darstellung eines Schienenfahrzeugsicherungssystems 20. Das Schienenfahrzeugsicherungssystem 20 unterscheidet sich von dem in Fig. 1 gezeigten Schienefahrzeugleitsystem 10 dadurch, dass in jeder der Schlüsselvergabestellen 1a, 1b, 1c (KMCs) eine Steuereinrichtung 7 angeordnet ist, welche für das Erzeugen und Verteilen von Kommunikationsschlüsseln für die Verschlüsselung von Verkehrsleitnachrichten ausgelegt ist. Die Steuereinrichtung 7 kann dabei beispielsweise ein Softwaremodul sein, welches auf den KMCs aufgespielt ist und ausgeführt wird.

Die Steuereinrichtung 7 umfasst eine Erzeugungseinrichtung zum Erzeugen von Kommunikationsschlüsseln 6 zum kryptographischen Schützen von Verkehrsleitnachrichten eines Schienenfahrzeugs 4. In den folgenden Beispielen wird angenommen, dass das Schienenfahrzeug 4 der Domäne A zugeordnet ist, so dass das KMC 1a das sogenannte "Heim-KMC" des Schienenfahrzeugs 4 ist, das heißt, dass das Erzeugen und Verteilen von Kommunikationsschlüsseln unter der Kontrolle des KMC 1a vorgenommen wird. Die übrigen KMCs 1b und 1c sind in diesem Fall von der Steuerung durch das KMC 1a abhängig. Es ist selbstverständlich ebenso möglich, dass die anderen KMC 1b und 1c in anderen Fällen, beispielsweise für andere Schienenfahrzeuge die Rolle des Heim-KMC übernehmen. Die Steuereinrichtungen 7 der KMC 1b und 1c sind dabei genauso wie die Steuereinrichtung 7 des KMC 1a aufgebaut. Es ist überdies selbstverständlich, dass die Anzahl der KMCs 1a, 1b und 1c nicht auf die gezeigte Anzahl von drei beschränkt ist. Jede andere Anzahl von KMCs ist ebenso möglich. Die KMCs 1a, 1b, 1c können dabei insbesondere von verschiedenen Streckenbetreibern betrieben werden.

Die Erzeugungseinrichtung kann dazu ausgelegt sein, in einem Schritt 8a einen Kommunikationsschlüssel 6 in Abhängigkeit von einer geplanten Fahrtroute des Schienenfahrzeugs 4 zu erzeugen. Dabei kann die Erzeugungseinrichtung dazu ausgelegt sein, die geplante Fahrtroute von einem (nicht gezeigten) Fahrdienststeuersystem oder einem Fahrplanauskunftssystem automatisch zur Verfügung gestellt zu bekommen.

Der Kommunikationsschlüssel 6 kann durch das erste KMC 1a dann in einem Schritt 8b einem zweiten KMC 1b zur Verfügung gestellt werden und in einem Schritt 8c einem dritten KMC 1c zur Verfügung gestellt werden. Die KMC 1b, 1c, denen der Kommunikationsschlüssel 6 zur Verfügung gestellt wird, richtet sich dabei nach der geplanten Fahrtroute des Schienenfahrzeugs 4. Beispielsweise können die KMC 1b, 1c für Streckenzentralen 3 verantwortlich sein, durch deren Leitbereich die geplante Fahrtroute des Schienenfahrzeugs 4 führt. Die Bereitstellung von Kommunikationsschlüsseln kann dabei über eine Bereitstellungseinrichtung der Steuereinrichtung 7 erfolgen.

In einem Schritt 9a kann dann der erzeugte Kommunikationsschlüssel 6 an erste Streckenzentralen 3 (RBCs) in der ersten Domäne A verteilt werden. Weiterhin kann in dem Schritt 9a der Kommunikationsschlüssel 6 auf einem Steuerrechner (EVC) des Schienenfahrzeugs 4 installiert werden. Der Kommunikationsschlüssel 6 kann in Schritten 9b und 9c durch die KMCs 1b und 1c den RBCs 3 in der Domäne B bzw. der Domäne C bereitgestellt werden.

Das KMC 1a kann nach erfolgter Verteilung der Kommunikationsschlüssel 6 eine Bestätigung ausstellen, dass das Schienenfahrzeug 4 betriebsbereit ist und die Domänen A, B und C befahren kann. Wenn beispielsweise wegen einer Streckensperrung oder einer sonstigen Umleitung des Schienenfahrzeugs 4 eine weitere (nicht gezeigte) Domäne D befahren werden soll, für die der Kommunikationsschlüssel 6 nicht den jeweiligen Streckenzentralen 3 zur Verfügung gestellt worden ist. Kann ein modifizierter Schlüsselverteilungsplan erstellt werden, wobei nach einer entsprechenden Autorisierung durch einen Bediener die Steuereinrichtung 7 den Kommunikationsschlüssel 6 auch an ein KMC der Domäne D weitergibt, welches dann seinerseits den Kommunikationsschlüssel an die RBCs 3 in seiner Domäne D weiterverteilt. Alternativ kann dem Bediener angezeigt werden, dass das Schienenfahrzeug 4 lediglich für die Domänen A, B und C, aber nicht für andere Domänen durchfahrberechtigt ist.

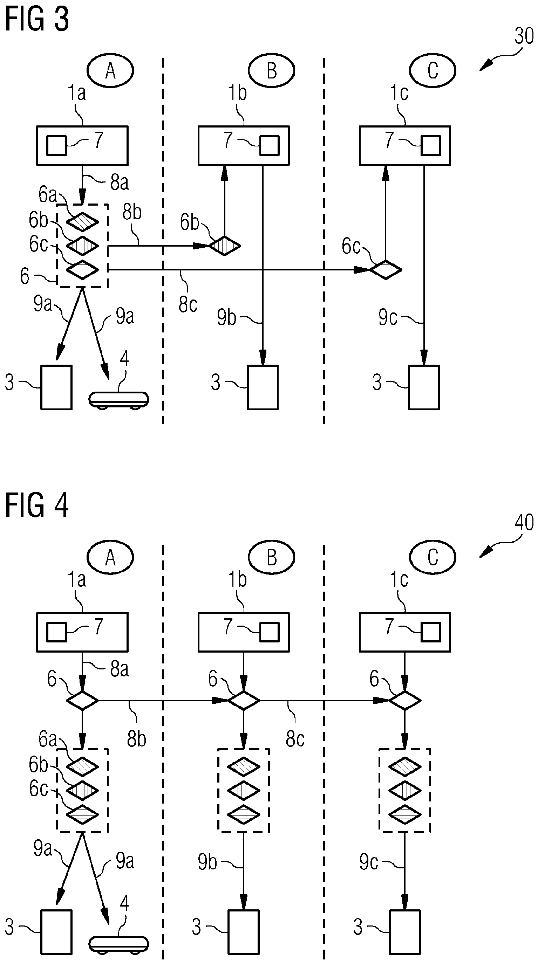

Fig. 3 zeigt eine schematische Darstellung eines Schienenfahrzeugsicherungssystems 30. Das Schienenfahrzeugsicherungssystem 30 unterscheidet sich von dem Schienenfahrzeugsicherungssystem 20 in Fig. 2 dadurch, dass der Kommunikationsschlüssel 6 eine Vielzahl von Kommunikationsschlüsseln 6a, 6b, 6c umfasst, welche domänenspezifisch bzw. streckenzentralenspezifisch erzeugt worden sind. Jeder der Kommunikationsschlüssel 6a, 6b, 6c kann dabei für ein RBC 3 gebietsspezifisch erzeugt werden. Die Kommunikationsschlüssel 6a, 6b, 6c können dabei zufällig oder pseudozufällig oder mittels einer Schlüsselableitungsfunktion aus einem Basisschlüssel und/oder einem RBC-abhängigen Ableitungsparameter erzeugt werden. Die Kommunikationsschlüssel 6a, 6b, 6c werden dann gemeinsam auf dem Steuerrechner des Schienenfahrzeugs 4 installiert.

Aus den Kommunikationsschlüsseln 6a, 6b, 6c werden dann Gruppen von Kommunikationsschlüsseln ausgewählt, welche den jeweiligen RBCs 3 der jeweiligen Domänen B und C zugeordnet werden können. In den Schritten 8b, 8c werden dann nur diejenigen Kommunikationsschlüssel 6b und 6c übermittelt, welche die KMCs 1b, 1c zur Bereitstellung an ihre RBCs benötigen.

Das Schienenfahrzeug 4 kann bei einem Durchfahren der Domänen A, B und C in Abhängigkeit von der aktuellen Position jeweils einer der Kommunikationsschlüssel 6a, 6b, 6c auswählen, um mit den momentan aktuellen RBC 3 der jeweiligen Domäne zu kommunizieren. Die aktuelle Position kann beispielsweise über ein Satellitennavigationssystem wie zum Beispiel GPS oder GA-LILEO, durch Peilung von Funkbasisstationen, zum Beispiel über GSM-R oder WLAN, anhand von Adressen oder Identifikationscodes von Streckenrechnern des Schienennetzes oder durch Eurobalisen, wie beispielsweise Festdaten- oder Transparentdatenbalisen am Gleisbett ermittelt werden.

Fig. 4 zeigt eine schematische Darstellung eines Schienenfahrzeugsicherungssystems 40. Das Schienenfahrzeugsicherungssystem 40 unterscheidet sich von dem Schienenfahrzeugsicherungssystem 30 in Fig. 3 dadurch, dass ein Hauptkommunikationsschlüssel 6 zwischen den KMCs 1a, 1b und 1c vorgesehen ist, von dem über eine Schlüsselableitungsfunktion eine Vielzahl von Kommunikationsschlüsseln 6a, 6b, 6c abgeleitet werden kann. In den Schritten 8b und 8c wird statt der Vielzahl von Kommunikationsschlüsseln 6a, 6b, 6c der Hauptkommunikationsschlüssel 6 an die KMCs 1b und 1c weitergegeben, die ihrerseits die Vielzahl von Kommunikationsschlüsseln 6a, 6b, 6c lokal ableiten können. Die Ableitung durch die KMCs kann beispielsweise in Abhängigkeit von einem zugspezifischen Parameter erfolgen, beispielsweise die Identifikationsnummer des Schienenfahrzeugs 4. Der Hauptkommunikationsschlüssel 6 kann dabei beispielsweise nur über einen bestimmten Zeitraum hinweg gültig sein.

Ebenso kann es vorgesehen sein, dass das Schienenfahrzeug 4 selbst mit dem Hauptkommunikationsschlüssel 6 versorgt wird, aus dem der Steuerrechner des Schienenfahrzeugs 4 die Vielzahl von Kommunikationsschlüsseln 6a, 6b, 6c selbst ableitet.

Die Ableitung der Vielzahl von Kommunikationsschlüsseln 6a, 6b, 6c von dem Hauptkommunikationsschlüssel 6 kann beispielsweise mittels einer Schlüsselableitungsfunktion (Key Derivation Function, KDF) wie HMAC (Hash Message Authentication Code) oder auch AES-CBCMAC (Advanced Encryption Standard - Cipher Block Chaining Message Authentication Code) in Abhängigkeit von RBC-spezifischen Parametern wie Identifikationscode, Gebietscode, Streckenabschnittscode oder ähnlicher Parameter abgeleitet werden.

Der Vorteil dieser Vorgehensweise besteht darin, dass keine ständige Online-Verbindung zwischen den KMCs 1a, 1b, 1c bestehen muss, da jedes KMC selbstständig RBC-spezifische Kommunikationsschlüssel 6a, 6b, 6c aus dem einmalig übertragenen Hauptkommunikationsschlüssel 6 ableiten kann, ohne dass dazu eine erneute Kommunikation mit dem Heim-KMC 1a nötig ist. Ferner müssen bei einer Vielzahl von Schienenfahrzeugen 4 und RBCs 3 nur wenige Daten zwischen den KMCs 1a, 1b, 1c ausgetauscht werden.

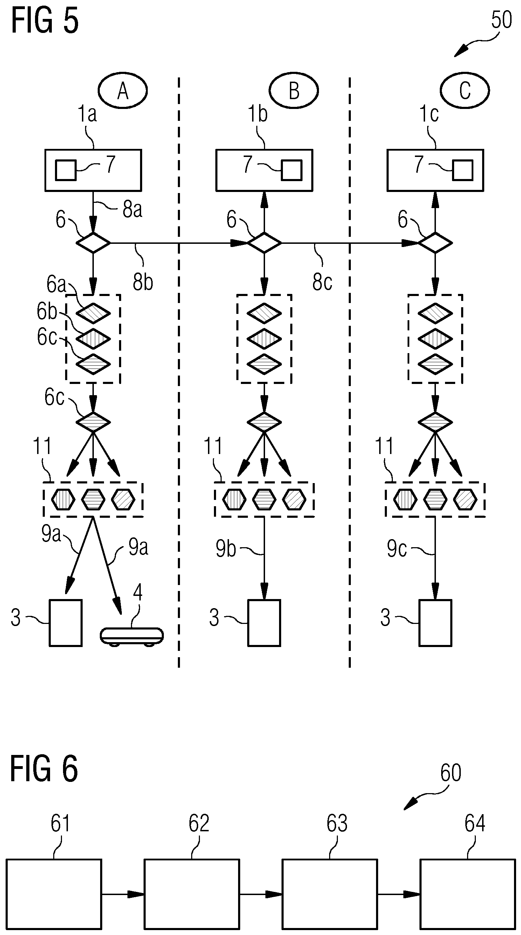

Fig. 5 zeigt eine schematische Darstellung eines Schienenfahrzeugsicherungssystems 50. Das Schienenfahrzeugsicherungssystem 50 unterscheidet sich von dem Schienenfahrzeugsicherungssystem 40 in Fig. 4 dadurch, dass ein Hauptkommunikationsschlüssel 6 vorgesehen ist, von dem über eine Schlüsselableitungsfunktion eine Vielzahl von schienenfahrzeugspezifischen Kommunikationsschlüsseln 6a, 6b, 6c abgeleitet werden kann. Von einem der schienenfahrzeugspezifischen Kommunikationsschlüssel 6c, welches beispielsweise dem Schienenfahrzeug 4 in Fig. 5 zugeordnet ist, kann dann wiederum eine Vielzahl von RBC-spezifischen Kommunikationsschlüsseln 11 abgeleitet werden, welche an die verschiedenen RBCs 3 durch die jeweiligen KMCs 1a, 1b, 1c verteilt werden können. Dem Schienenfahrzeug 4 wird dann jeweils der schienenfahrzeugspezifische Kommunikationsschlüssel 6c sowie die RBC-spezifischen Kommunikationsschlüssel 11 bereitgestellt, so dass eine Kommunikation mit den jeweiligen RBCs 3 über eine Auswahl eines der RBC-spezifischen Kommunikationsschlüssel 11 erfolgen kann.

Es kann beispielsweise vorgesehen sein, dass auf zwei Schienenfahrzeugen unterschiedlicher Betreiber bzw. unterschiedlicher Heim-KMCs der gleiche schienenfahrzeugspezifische Kommunikationsschlüssel 6c installiert wird, so dass bei einer Kopplung der zwei Schienenfahrzeug eine sichere Schienenfahrzeugkommunikation ermöglicht wird.

Fig. 6 zeigt eine schematische Darstellung eines Verfahrens 60 zum Verteilen von Kommunikationsschlüsseln für die Verschlüsselung von Verkehrsleitnachrichten eines Schienenfahrzeugsicherungssystems. In einem ersten Schritt 61 erfolgt ein Erzeugen eines Kommunikationsschlüssels in einer ersten Schlüsselvergabestelle (KMC) eines ersten Streckenbetreibers in Abhängigkeit von einer geplanten Fahrtroute eines Schienenfahrzeugs. In einem zweiten Schritt 62 erfolgt ein Bereitstellen des Kommunikationsschlüssels an ein zweites KMC eines zweiten Streckenbetreibers. In einem dritten Schritt 63 erfolgt ein Bereitstellen des Kommunikationsschlüssels an das Schienenfahrzeug durch das erste KMC. In einem vierten Schritt 64 erfolgt ein Verschlüsseln von Verkehrsleitnachrichten des Schienenfahrzeugs mit dem Kommunikationsschlüssel zum manipulationssicheren Kommunizieren des Schienenfahrzeugs mit RBCs des ersten Streckenbetreibers und mit RBCs des zweiten Streckenbetreibers. Unter Verschlüsseln einer Verkehrsleitnachricht wird insbesondere verstanden, dass Nutzdaten und/oder Verwaltungsdaten, zum Beispiel Adressierungsinformationen, einer Verkehrsleitnachricht kryptographisch vor Abhören und/oder Manipulation geschützt werden, beispielsweise durch Ersetzen von Klartextdaten durch entsprechende verschlüsselte Cipher-Daten, und/oder durch Hinzufügen einer kryptographischen Integritätsprüfinformation (Message Authentication Code).

## Patentansprüche

1. Verfahren zum Verteilen von Kommunikationsschlüsseln (6; 6a, 6b, 6c; 11) für die Verschlüsselung von Verkehrsleitnachrichten eines Schienenfahrzeugsicherungssystems, mit den Schritten:
Erzeugen eines Kommunikationsschlüssels (6; 6a, 6b, 6c; 11) in einer ersten Schlüsselvergabestelle (1a) eines ersten Streckenbetreibers in Abhängigkeit von einer geplanten Fahrtroute eines Schienenfahrzeugs (4);
Bereitstellen des Kommunikationsschlüssels (6; 6a, 6b, 6c; 11) an das Schienenfahrzeug (4) durch die erste Schlüsselvergabestelle; und
Verschlüsseln von Verkehrsleitnachrichten des Schienenfahrzeugs (4) mit dem Kommunikationsschlüssel (6; 6a, 6b, 6c; 11) zum manipulationssicheren Kommunizieren des Schienenfahrzeugs (4) mit Streckenzentralen (3) des ersten Streckenbetreibers und mit Streckenzentralen (3) eines zweiten Streckenbetreibers **gekennzeichnet durch** den Schritt
Bereitstellen des Kommunikationsschlüssels (6; 6a, 6b, 6c; 11) an eine zweite Schlüsselvergabestelle (1b) des zweiten Streckenbetreibers,
wobei das Erzeugen und Verteilen von Kommunikationsschlüsseln unter der Kontrolle des ersten Schlüsselvergabestelle (1a) erfolgt.

2. Verfahren nach Anspruch 1, weiterhin mit den Schritten:
Bereitstellen des Kommunikationsschlüssels (6; 6a, 6b, 6c; 11) an erste Streckenzentralen (2a; 3) durch den ersten Streckenbetreiber; und
Bereitstellen des Kommunikationsschlüssels (6; 6a, 6b, 6c; 11) an zweite Streckenzentralen (2b; 3) durch den zweiten Streckenbetreiber.

3. Verfahren nach Anspruch 2, wobei der Kommunikationsschlüssel eine Vielzahl von streckenzentralenspezifischen Kommunikationsschlüsseln (6a, 6b, 6c) umfasst, wobei das Bereitstellen des Kommunikationsschlüssels (6; 6a, 6b, 6c; 11) an die zweite Schlüsselvergabestelle (1b) das Bereitstellen einer Gruppe von streckenzentralenspezifischen Kommunikationsschlüsseln (6a, 6b, 6c), welche den zweiten Streckenzentralen (2b; 3) des zweiten Streckenbetreibers zugeordnet sind, an die zweite Schlüsselvergabestelle (1b) umfasst.

4. Verfahren nach Anspruch 3, wobei das Erzeugen des Kommunikationsschlüssels (6; 6a, 6b, 6c; 11) in einer ersten Schlüsselvergabestelle (1a) das Ableiten der streckenzentralenspezifischen Kommunikationsschlüssel (6a, 6b, 6c) von einem Hauptkommunikationsschlüssel (6) durch ein Schlüsselableitungsverfahren umfasst.

5. Verfahren nach Anspruch 4, wobei das Ableiten der streckenzentralenspezifischen Kommunikationsschlüssel (6a, 6b, 6c) von einem Steuerrechner des Schienenfahrzeugs (4) durchgeführt wird.

6. Verfahren nach Anspruch 4, wobei das Ableiten der streckenzentralenspezifischen Kommunikationsschlüssel (6a, 6b, 6c) von der ersten und zweiten Schlüsselvergabestelle (1a, 1b) durchgeführt wird.

7. Verfahren nach Anspruch 6, wobei das Ableiten der streckenzentralenspezifischen Kommunikationsschlüssel (6a, 6b, 6c) durch die erste Schlüsselvergabestelle (1a) nur für die ersten Streckenzentralen (2a; 3) und das Ableiten der streckenzentralenspezifischen Kommunikationsschlüssel (6a, 6b, 6c) durch die zweite Schlüsselvergabestelle (1b) nur für die zweiten Streckenzentralen (2b; 3) durchgeführt wird.

8. Verfahren nach Anspruch 2, wobei der Kommunikationsschlüssel eine Vielzahl von schienenfahrzeugspezifischen Kommunikationsschlüsseln (6a, 6b, 6c) umfasst, wobei das Bereitstellen des Kommunikationsschlüssels (6; 6a, 6b, 6c; 11) an das Schienenfahrzeug (4) das Bereitstellen eines für das Schienenfahrzeug (4) spezifischen Kommunikationsschlüssels aus der Vielzahl von schienenfahrzeugspezifischen Kommunikationsschlüsseln (11) umfasst.

9. Verfahren nach Anspruch 8, weiterhin mit den Schritten:
Ableiten jeweils einer Vielzahl von streckenzentralenspezifischen Kommunikationsschlüsseln (11) von der Vielzahl der schienenfahrzeugspezifischen Kommunikationsschlüssel (6a, 6b, 6c); und
Bereitstellen einer Gruppe von streckenzentralenspezifischen Kommunikationsschlüsseln (11) jeweils einer der Vielzahl von streckenzentralenspezifischen Kommunikationsschlüsseln (11), welche schienenfahrzeugspezifisch den zweiten Streckenzentralen (2b; 3) des zweiten Streckenbetreibers zugeordnet sind, an die zweite Schlüsselvergabestelle (1b).

10. Verfahren nach Anspruch 9, wobei das Ableiten der Vielzahl von streckenzentralenspezifischen Kommunikationsschlüsseln (11) von der Vielzahl der schienenfahrzeugspezifischen Kommunikationsschlüssel (6a, 6b, 6c) durch einen Steuerrechner des Schienenfahrzeugs (4) durchgeführt wird.

11. Verfahren nach einem der Ansprüche 1 bis 10, wobei die geplante Fahrtroute des Schienenfahrzeugs (4) von einem Leitsystem zur Fahrdienststeuerung bereitgestellt wird, und wobei die erste Schlüsselvergabestelle (1a) das Erzeugen und das Bereitstellen des Kommunikationsschlüssels (6; 6a, 6b, 6c; 11) automatisiert durchführt.

12. Steuereinrichtung (7) in einer ersten Schlüsselvergabestelle (1a) eines ersten Schienennetzstreckenbetreibers zum Verteilen von Kommunikationsschlüsseln (6; 6a, 6b, 6c; 11) für die Verschlüsselung von Verkehrsleitnachrichten eines Schienenfahrzeugsicherungssystems, mit:
einer Erzeugungseinrichtung, welche dazu ausgelegt ist, einen Kommunikationsschlüssel (6; 6a, 6b, 6c; 11) in Abhängigkeit von einer geplanten Fahrtroute eines Schienenfahrzeugs (4) zu erzeugen; und
einer Bereitstellungseinrichtung, welche dazu ausgelegt ist, den erzeugten Kommunikationsschlüssel (6; 6a, 6b, 6c; 11) an das Schienenfahrzeug (4) bereitzustellen, wobei der Kommunikationsschlüssel (6; 6a, 6b, 6c; 11) zum Verschlüsseln von Verkehrsleitnachrichten des Schienenfahrzeugs (4) zum manipulationssicheren Kommunizieren des Schienenfahrzeugs (4) mit Streckenzentralen (2a; 3) des ersten Streckenbetreibers und mit Streckenzentralen (2b; 3) eines zweiten Streckenbetreibers ausgelegt ist;
**dadurch gekennzeichnet, dass**
die Bereitstellungseinrichtung dazu ausgelegt, ist den erzeugten Kommunikationsschlüssel (6; 6a, 6b, 6c; 11) an die zweite Schlüsselvergabestelle (1b) des zweiten Streckenbetreibers bereitzustellen,
wobei das Erzeugen und Verteilen von Kommunikationsschlüsseln unter der Kontrolle des ersten Schlüsselvergabestelle (1a) erfolgt.

13. Schienenfahrzeugsicherungssystem (20; 30; 40; 50), mit:
einer Steuereinrichtung (7) nach Anspruch 12;
einer ersten Schlüsselvergabestelle (1a), in der die Steuereinrichtung (7) angeordnet ist;
einer Vielzahl von ersten Streckenzentralen (2a; 3), welche dazu ausgelegt sind, von der ersten Schlüsselvergabestelle (1a) mit einem von der Steuereinrichtung (7) erzeugten Kommunikationsschlüssel (6; 6a, 6b, 6c; 11) für die Verschlüsselung von Verkehrsleitnachrichten eines Schienenfahrzeugs (4) versorgt zu werden;
einer zweiten Schlüsselvergabestelle (1b); und
einer Vielzahl von zweiten Streckenzentralen (2b; 3), welche dazu ausgelegt sind, von der zweiten Schlüsselvergabestelle (1b) mit einem von der Steuereinrichtung (7) erzeugten Kommunikationsschlüssel (6; 6a, 6b, 6c; 11) für die Verschlüsselung von Verkehrsleitnachrichten eines Schienenfahrzeugs (4) versorgt zu werden.

## Claims

1. Method for distributing communication keys (6; 6a, 6b, 6c; 11) for the encryption of traffic management messages of a rail vehicle safety system, having the steps of:
generation of a communication key (6; 6a, 6b, 6c; 11) in a first key allocation centre (1a) of a first section operator on the basis of a planned journey route for a rail vehicle (4) ;
provision of the communication key (6; 6a, 6b, 6c; 11) to the rail vehicle (4) by the first key allocation centre; and
encryption of traffic management messages of the rail vehicle (4) using the communication key (6; 6a, 6b, 6c; 11) for the purpose of manipulation-proof communication by the rail vehicle (4) with section control centres (3) of the first section operator and with section control centres (3) of a second section operator,
**characterized by** the step of
provision of the communication key (6; 6a, 6b, 6c; 11) to a second key allocation centre (1b) of the second section operator,
wherein communication keys are generated and distributed under the control of the first key allocation centre (1a).

2. Method according to Claim 1, additionally having the steps of:
provision of the communication key (6; 6a, 6b, 6c; 11) to first section control centres (2a; 3) by the first section operator; and
provision of the communication key (6; 6a, 6b, 6c; 11) to second section control centres (2b; 3) by the second section operator.

3. Method according to Claim 2, wherein the communication key comprises a multiplicity of section-control-centre-specific communication keys (6a, 6b, 6c), wherein the provision of the communication key (6; 6a, 6b, 6c; 11) to the second key allocation centre (1b) comprises the provision of a group of section-control-centre-specific communication keys (6a, 6b, 6c), which are associated with the second section control centres (2b; 3) of the second section operator, to the second key allocation centre (1b).

4. Method according to Claim 3, wherein the generation of the communication key (6; 6a, 6b, 6c; 11) in a first key allocation centre (1a) comprises the deduction of the section-control-centre-specific communication keys (6a, 6b, 6c) from a main communication key (6) by a key deduction method.

5. Method according to Claim 4, wherein the deduction of the section-control-centre-specific communication keys (6a, 6b, 6c) is performed by a control computer of the rail vehicle (4).

6. Method according to Claim 4, wherein the deduction of the section-control-centre-specific communication keys (6a, 6b, 6c) is performed by the first and second key allocation centres (1a, 1b).

7. Method according to Claim 6, wherein the deduction of the section-control-centre-specific communication keys (6a, 6b, 6c) by the first key allocation centre (1a) is performed only for the first section control centres (2a; 3) and the deduction of the section-control-centre-specific communication keys (6a, 6b, 6c) by the second key allocation centre (1b) is performed only for the second section control centres (2b; 3).

8. Method according to Claim 2, wherein the communication key comprises a multiplicity of rail-vehicle-specific communication keys (6a, 6b, 6c), wherein the provision of the communication key (6; 6a, 6b, 6c; 11) to the rail vehicle (4) comprises the provision of a communication key that is specific to the rail vehicle (4) from the multiplicity of rail-vehicle-specific communication keys (11).

9. Method according to Claim 8, additionally having the steps of:
deduction of a respective multiplicity of section-control-centre specific communication keys (11) from the multiplicity of rail-vehicle-specific communication keys (6a, 6b, 6c); and
provision of a group of section-control-centre-specific communication keys (11) from a respective one of the multiplicity of section-control-centre-specific communication keys (11) that are associated with the second section control centres (2b; 3) of the second section operator on a rail-vehicle-specific basis to the second key allocation centre (1b).

10. Method according to Claim 9, wherein the deduction of the multiplicity of section-control-centre-specific communication keys (11) from the multiplicity of rail-vehicle-specific communication keys (6a, 6b, 6c) is performed by a control computer of the rail vehicle (4).

11. Method according to one of Claims 1 to 10, wherein the planned journey route of the rail vehicle (4) is provided by a management system for rail service control, and wherein the first key allocation centre (1a) performs the generation and the provision of the communication key (6; 6a, 6b, 6c; 11) in automated fashion.

12. Control device (7) in a first key allocation centre (1a) of a first rail network section operator for distributing communication keys (6; 6a, 6b, 6c; 11) for the encryption of traffic management messages of a rail vehicle safety system, having:
a generation device that is designed to generate a communication key (6; 6a, 6b, 6c; 11) on the basis of a planned journey route for a rail vehicle (4); and
a provision device that is designed to provide the generated communication key (6; 6a, 6b, 6c; 11) to the rail vehicle (4), wherein the communication key (6; 6a, 6b, 6c; 11) is designed for encrypting traffic management messages of the rail vehicle (4) for manipulation-proof communication by the rail vehicle (4) with section control centres (2a; 3) of the first section operator and with section control centres (2b; 3) of a second section operator;
**characterized in that**
the provision device is designed to provide the generated communication key (6; 6a, 6b, 6c; 11) to the second key allocation centre (1b) of the second section operator,
wherein communication keys are generated and distributed under the control of the first key allocation centre (1a).

13. Rail vehicle safety system (20; 30; 40; 50), having:
a control device (7) according to Claim 12;
a first key allocation centre (1a) in which the control device (7) is arranged;
a multiplicity of first section control centres (2a; 3) that are designed to be supplied, by the first key allocation centre (1a), with a communication key (6; 6a, 6b, 6c; 11) generated by the control device (7) for the encryption of traffic management messages of a rail vehicle (4);
a second key allocation centre (1b); and
a multiplicity of second section control centres (2b; 3) that are designed to be supplied, by the second key allocation centre (1b), with a communication key (6; 6a, 6b, 6c; 11) generated by the control device (7) for the encryption of traffic management messages of a rail vehicle (4).

## Revendications

1. Procédé de répartition de clés de communication (6 ; 6a, 6b, 6c ; 11) pour le cryptage de messages de gestion de trafic d'un système de sécurisation de véhicules ferroviaires, comportant les étapes :
génération d'une clé de communication (6 ; 6a, 6b, 6c ; 11) à un premier poste d'attribution de clés (1a) d'un premier gestionnaire de voies ferrées en fonction d'un itinéraire prévu d'un véhicule ferroviaire (4) ;
fourniture de la clé de communication (6 ; 6a, 6b, 6c ; 11) au véhicule ferroviaire (4) par le premier poste d'attribution de clés ; et
cryptage de messages de gestion de trafic du véhicule ferroviaire (4) avec la clé de communication (6 ; 6a, 6b, 6c ; 11) pour la communication du véhicule ferroviaire (4) sécurisée contre la manipulation avec des centrales de voies ferrées (3) du premier gestionnaire de voies ferrées et des centrales de voies ferrées (3) d'un deuxième gestionnaire de voies ferrées,
**caractérisé par** l'étape suivants :
fourniture de la clé de communication (6 ; 6a, 6b, 6c ; 11) à un deuxième poste d'attribution de clés (1b) du deuxième gestionnaire de voies ferrées,
la génération et la répartition de clés de communication se faisant sous le contrôle du premier poste d'attribution de clés (1a).

2. Procédé selon la revendication 1, comportant en outre les étapes suivantes :
fourniture de la clé de communication (6 ; 6a, 6b, 6c ; 11) à des premières centrales de voies ferrées (2a ; 3) par le premier gestionnaire de voies ferrées ; et
fourniture de la clé de communication (6 ; 6a, 6b, 6c ; 11) à des deuxièmes centrales de voies ferrées (2b ; 3) par le deuxième gestionnaire de voies ferrées.

3. Procédé selon la revendication 2, la clé de communication comprenant une pluralité de clés de communication spécifiques aux centrales de voies ferrées (6a, 6b, 6c), la fourniture de la clé de communication (6 ; 6a, 6b, 6c ; 11) au deuxième poste d'attribution de clés (1b) incluant la fourniture d'un groupe de clés de communication spécifiques aux centrales de voies ferrées (6a, 6b, 6c) affectées aux deuxièmes centrales de voies ferrées (2b ; 3) du deuxième gestionnaire de voies ferrées au deuxième poste d'attribution de clés (1b).

4. Procédé selon la revendication 3, la génération de la clé de communication (6 ; 6a, 6b, 6c ; 11) à un premier poste d'attribution de clés (1a) comprenant la dérivation des clés de communication spécifiques aux centrales de voies ferrées (6a, 6b, 6c) à partir d'une clé de communication principale (6) par un procédé de dérivation de clé.

5. Procédé selon la revendication 4, la dérivation des clés de communication spécifiques aux centrales de voies ferrées (6a, 6b, 6c) étant effectuée par un ordinateur de commande du véhicule ferroviaire (4).

6. Procédé selon la revendication 4, la dérivation des clés de communication spécifiques aux centrales de voies ferrées (6a, 6b, 6c) étant effectuée par les premier et deuxième postes d'attribution de clés (1a, 1b).

7. Procédé selon la revendication 6, la dérivation des clés de communication spécifiques aux centrales de voies ferrées (6a, 6b, 6c) par le premier poste d'attribution de clés (1a) étant effectuée uniquement pour les premières centrales de voies ferrées (2a ; 3) et la dérivation des clés de communication spécifiques aux centrales de voies ferrées (6a, 6b, 6c) par le deuxième poste d'attribution de clés (1b) étant effectuée uniquement pour les deuxièmes centrales de voies ferrées (2b ; 3).

8. Procédé selon la revendication 2, la clé de communication comprenant une pluralité de clés de communication spécifiques aux véhicules ferroviaires (6a, 6b, 6c), la fourniture de la clé de communication (6 ; 6a, 6b, 6c ; 11) au véhicule ferroviaire (4) incluant la fourniture d'une clé de communication spécifique au véhicule ferroviaire (4) à partir de la pluralité de clés de communication spécifiques aux véhicules ferroviaires (11).

9. Procédé selon la revendication 8, comprenant en outre les étapes suivantes :
dérivation de respectivement une pluralité de clés de communication spécifiques aux centrales de voies ferrées (11) à partir de la pluralité des clés de communication spécifiques aux véhicules ferroviaires (6a, 6b, 6c) ; et
fourniture, au deuxième poste d'attribution de clés (1b), d'un groupe de clés de communication spécifiques aux centrales de voies ferrées (11) de respectivement l'une des pluralités de clés de communication spécifiques aux centrales de voies ferrées (11) affectées, de manière spécifique aux véhicules ferroviaires, aux deuxièmes centrales de voies ferrées (2b ; 3) du deuxième gestionnaire de voies ferrées.

10. Procédé selon la revendication 9, la dérivation de la pluralité de clés de communication spécifiques aux centrales de voies ferrées (11) à partir de la pluralité des clés de communication spécifiques aux véhicules ferroviaires (6a, 6b, 6c) étant effectuée par un ordinateur de commande du véhicule ferroviaire (4).

11. Procédé selon l'une des revendications 1 à 10, l'itinéraire prévu du véhicule ferroviaire (4) étant fourni par un système de gestion pour la commande de service de transport et le premier poste d'attribution de clés (1a) effectuant de manière automatisée la génération et la fourniture de la clé de communication (6 ; 6a, 6b, 6c ; 11).

12. Dispositif de commande (7) dans un premier poste d'attribution de clés (1a) d'un premier gestionnaire de voies ferrées de réseau ferroviaire pour la répartition de clés de communication (6 ; 6a, 6b, 6c ; 11) pour le cryptage de messages de gestion de trafic d'un système de sécurisation de véhicules ferroviaires, comportant :
un dispositif générateur conçu pour générer une clé de communication (6 ; 6a, 6b, 6c ; 11) en fonction d'un itinéraire prévu d'un véhicule ferroviaire (4) ; et
un dispositif de mise à disposition conçu pour fournir la clé de communication générée (6 ; 6a, 6b, 6c ; 11) au véhicule ferroviaire (4), la clé de communication (6 ; 6a, 6b, 6c ; 11) étant conçue pour crypter des messages de gestion de trafic des véhicule ferroviaire (4) pour la communication sécurisée contre la manipulation des véhicule ferroviaire (4) avec des centrales de voies ferrées (2a ; 3) du premier gestionnaire de voies ferrées et des centrales de voies ferrées (2b ;3) d'un deuxième gestionnaire de voies ferrées,
**caractérisé en ce que**
le dispositif de mise à disposition est conçu pour fournir la clé de communication générée (6 ; 6a, 6b, 6c ; 11) au deuxième poste d'attribution de clés (1b) du deuxième gestionnaire de voies ferrées,
la génération et la répartition de clés de communication se faisant sous le contrôle du premier poste d'attribution de clés (1a).

13. Système de sécurisation de véhicules ferroviaires (20 ; 30 ; 40 ; 50), comportant :
un dispositif de commande (7) selon la revendication 12 ;
un premier poste d'attribution de clés (1a) dans lequel est agencé le dispositif de commande (7) ;
une pluralité de premières centrales de voies ferrées (2a ; 3) conçues pour être desservies par le premier poste d'attribution de clés (1a) avec une clé de communication (6 ; 6a, 6b, 6c ; 11), générée par le dispositif de commande (7), pour le cryptage de messages de gestion de trafic d'un véhicule ferroviaire (4) ;
un deuxième poste d'attribution de clés (1b) ; et
une pluralité de deuxièmes centrales de voies ferrées (2b ; 3) conçues pour être desservies par le deuxième poste d'attribution de clés (1b) avec une clé de communication (6 ; 6a, 6b, 6c ; 11), générée par le dispositif de commande (7), pour le cryptage de messages de gestion de trafic d'un véhicule ferroviaire (4).
